# EUROPEAN PATENT APPLICATION

(11) **EP 4 549 145 A1**
(43) Date of publication of application: **07.05.2025**
(21) Application number: 23207956.6
(22) Date of filing: 06.11.2023
(51) Int. Cl.: B32B 7/06, B32B 27/10, B32B 27/30, B32B 27/36

(54) **POLYMER MULTILAYER**

(71) Applicant: Tchibo GmbH, 22297 Hamburg (DE)
(72) Inventor: BRÖCKEL, Jens, 22337 Hamburg (DE); DÖHMEN, Ben, 20144 Hamburg (DE)
(74) Representative: Frei Patent Attorneys

(57) **Abstract**

A multilayer comprises at least one first layer, at least one second layer, at least one intermediary layer and at least one outer layer. The first layer functions as an oxygen transmission barrier and the second layer as water vapor and/or humidity barrier. The intermediate layer is compatible with both, the first and the second layer and makes it possible to form a multilayer from a first layer and a second layer. The outer layer is located on the outside of a first layer and/or of a second layer and is the outside facing layer of the multilayer.

## Description

The invention relates to the field of food packaging, in particular polymer multilayers for food packaging. It relates to a multilayer and a method for producing a multilayer as described in the preamble of the independent claims.

Packaging is a primary requirement of any finished food product. Packaging of sensitive food products like coffee, cereals, cheese, meat, detergents, skincare products, and/or chocolate, demands inherent functionality. Not only does it need to ensure shelf-life, but it must also protect flavour and - in the interest of marketability - have visual appeal. Besides marketing and environmental functions, packaging also plays an important role in supply chains by fulfilling several logistical functions including transportation, storage, distribution, and materials handling.

Present and existing packing materials suitable for sensitive food products typically consist of multilayer films or multilayer architectures like e. g. PET/Alu/PE or Paper/PET/Alu/PE and typically provide a good barrier against oxygen, moisture and light and run well on existing packaging lines. Respective multilayer materials are known to be not recyclable within cost efficient existing recycling streams, which are moreover energetically or chemically complex. One reason for this is, that the layers, mostly made from very different materials, are irreversibly bonded together. Consequently, the available mechanical recycling processes are not able to separate the individual layers. One disposal method for respective multilayers is thermal treatment, i. e. burning. In case of countries with no existing disposal systems or where landfill deposition is a common, these multilayer structures may maintain virtually unchanged for several hundred years (see for instance W. Feng et. al. Progress in Polymer Science 117 (2021) 101395).

For many years, conventional petroleum- and aluminum-based, non-degradable and not efficiently recyclable multilayers have been predominantly used for food packaging applications, due to the lack of viable, more sustainable, and better recyclable alternatives. More recently, biodegradable polymers (biopolymers) emerged as an alternative approach for many industrial applications.

To ensure good oxygen and moisture barrier properties of biodegradable polymer multilayers for food packaging, a water-resistant polymer layer in combination with an oxygen resistant polymer layer can be used. Such polymer multilayers based on biodegradable polymers have been described previously.

In certain multilayers the water-resistant layer comprises a water insoluble or polar polymer, which functions as a moisture barrier layer and the oxygen resistant layer comprises a water soluble or apolar polymer which functions as an oxygen barrier layer. It is a challenge to manufacture such multilayer structures due to the respective polar and apolar properties of the two layers and the resulting repellent forces between the layers, as discussed for example in US 7854994, where the issue is solved by implementing a tie layer consisting for example of grafted polymers. US 202038475, WO 2019049798, US 20140030536 solve this issue as well by implementing a tie layer between the two layers.

The tie layer can also be called adhesion promotion layer. The tie layer can enhance the inter-layer adhesion, meaning it enhances the adhesion between adjacent functional layers of the multilayer.

Enhanced inter-layer adhesion may be realized by adding adhesion promoting additives into one or both adjacent layers not exhibiting sufficient inter-layer adhesion, or by chemical modification of the base polymers used in the individual layers.

To achieve the desired inter-layer adhesion one or both of the adjacent layers may be modified.

Enhanced inter-layer adhesion may also be achieved by incorporation of specific adhesion layers, also referred to as tie-layers, between two adjacent layers, not exhibiting sufficient adhesion towards each other

While implementing a tie layer may solve the issue of insufficient inter-layer adhesion between incompatible layers, it can be disadvantageous towards the end of the life-cycle during recycling of the multilayer. In current recycling processes, separating individual layers of a multilayer remains a major challenge. This in general leads to multilayers being sorted out before entering the recycling pathway and being thermally recycled so as not to compromize the recycling of monomaterial plastics.

Separating individual layers of a multilayer in a first step of the recycling process can solve this problem, since after separation, it may be possible to process at least one of the individual layers in conventional recycling processes in opposite to the state of the art, where complex multilayer material may be thermally recycled.

It is therefore an object of the invention to provide a multilayer, which overcomes the disadvantages of the prior art.

These objects are achieved by a multilayer and a method to produce a multilayer as well as the use of the multilayer for packing and a packaging comprising the multilayer according to the invention.

A **multilayer** may comprise the following layers:
- at least one **first layer,** being polar and functioning as an oxygen transmission barrier,
- at least one **second layer,** being apolar and functioning as a water vapor and/or humidity barrier,
- at least one **intermediate layer,** located between a first and a second layer, substantially consisting of paper,
at least one **outer layer** on an outer surface of the first or on an outer surface of the second layer, substantially consisting of paper.

This multilayer structure makes it possible, that the first layer and the second layer can form uninterrupted layers on the intermediate layer and/or the outer layer, both consisting substantially of paper in comparison to the state of the art, where the issue of forming continuous multilayers from at least one first and at least one second layer is solved by implementing a specifically composed tie layer. Thereby, a multilayer with excellent oxygen transmission barrier and water vapor and/or humidity barrier properties can be obtained. The first layer may contribute more than 50% of the oxygen barrier properties of the multilayer and the second layer may contribute at least 50% of the water vapor and/or humidity barrier properties of the multilayer.

The intermediate layer and the outer layer, both substantially consisting of paper, are relatively unselective towards the specific material properties of the first and the second layer, so that even after possible re-formulations and compositional changes of the first layer and/or the second layer, no changes to the material of the intermediate layer and the outer layer is necessary.

The term paper as used herein refers to a thin sheet made of processed cellulose fibres derived from wood, rags, grasses, or other vegetable sources. The cellulose fibers undergo meticulous mechanical and chemical processing to yield a unified, flexible, and cohesive substance known as paper. This engineered composition renders paper sheets amenable to a wide spectrum of applications, including within multilayer configurations. Usually, the cellulose fibres are brought in water, which is drained through a fine mesh leaving the fibre evenly distributed on the surface, followed by pressing and drying.

Therefore, the main component of the intermediate layer and the outer layer may be cellulose fiber at typically 70 wt.% to 99 wt.%. The cellulose fiber can be obtained from a broad range of sources, such as wood pulp, bamboo, cotton, flax, hemp, bagasse, kenaf, jute, abaca or rice straw. The intermediate layer and the outer layer further can comprise fillers such as calcium carbonate, clay or talc and other additives such as sizing agents and binding agents.

The intermediate layer and the outer layer, both substantially consisting of paper, can comprise recycled paper or can be made of up to 100% recycled paper. The proportion of paper in the total multilayer material can be between 50 and 95 wt.%. It is preferred that the multilayer comprises 50, 75 or 95 wt.% paper.

In embodiments, the composition of the multilayer is as follows:
the first layer makes up around 2.5-25 wt.% of the multilayer,
the second layer makes up around 2.5-25 wt.% of the multilayer,
the intermediate layer makes up around 25-47.5 wt.% of the multilayer,
the outer layer makes up around 25-47.5 wt.% of the multilayer.

The intermediate layer can have, in addition to acting as a binding layer between the first layer and the second layer, another function: The intermittent layer primarily reduces repulsion between the first layer and the second layer, without forming a strong, active bond with the first layer or the second layer. The intermittent layer located between the first and the second layer can thereby have a function at the end of the life-cycle of the multilayer, where it might be a goal to separate the first layer and the second layer from each other before entering the recycling pathway, and where the intermediate layer may allow it to separate or at least improve the separability of the first layer from the second layer making it possible to recycle at least one of the individual layers of a multilayer in conventional recycling pathways.

The outer layer functions as an outward facing final layer of the multilayer and can have multiple functions: The outer layer can be the contact point (visually and haptically) of the consumer to the product packaged by the multilayer. Further, the outer layer can improve the durability and stability of the multilayer and potentially also has an important role during recycling, when it can support layer separation making it possible to recycle at least one of the individual layers of a multilayer in conventional recycling pathways.

The multilayer, in particular the first layer can have an oxygen transmission rate of a maximum of 3 cm³/m² per day at room temperature (RT, room temperature = 23°C) and a relative humidity of 50% (relative humidity = r. h.), in particular the oxygen transmission rate can be maximal 1 cm³/m² per day at room temperature and a relative humidity of 50%, in particular maximal 0,2 cm³/m² per day at room temperature (23°C) and a relative humidity of 50%; in particular maximal 0,05 cm³/m² per day at room temperature (23°C) and a relative humidity of 50%.

The oxygen transmission rate (OTR) is the steady state rate at which oxygen gas permeates through a film at specified conditions of temperature and relative humidity. Values are expressed in cc/m²/24 hr in metric (or SI) units, with cc being cubic centimetre being cm³, m² being square metre, 24 hr being 24 hours being one day. The OTR in this text is determined according to ISO 15105-2 (as of April 2022).

The multilayer, in particular the second layer, can have a water vapor and/or humidity barrier of a maximum of 15 g/m² per day at 23°C and a relative humidity of 85%, in particular a maximum of 10 g/m² per day at 23°C and a relative humidity of 85%, in particular 7 g/m² per day at 23°C and a relative humidity of 85%, in particular a maximum of 3 g/m² per day at 23°C and a relative humidity of 85%, in particular a maximum of 1 g/m² per day at 23°C and a relative humidity of 85%, in particular a maximum of 0.5 g/m² per day at 23°C and a relative humidity of 85%, in particular a maximum of 0.1 g/m² per day at 23°C and a relative humidity of 85%.

The water vapor and/or humidity barrier in this text is determined according to ISO 15106-2 (as of April 2022).

The multilayer can offer a high barrier-performance with respect to oxygen permeation and permeation of water / humidity. This enables for a broad applicability of the multilayer in various areas as e.g. in packing, in particular for food packing, in particular for packing coffee.

The multilayer can have a barrier-performance with respect to oxygen permeation, CO₂ permeation, nitrogen permeation and/or permeation of water / humidity. The applied multilayer can thus achieve extended product storage time, when e. g. used in packaging.

The strategy behind respective multilayer architectures is to provide more than one material specific property, not possible to be realized by sole application of one single material, e. g. the realization of good oxygen transmission barrier, water barrier, CO₂ barrier and aroma barrier properties for e. g. the packaged good.

In embodiments, the first layer comprises a water-soluble (hydrophilic) polymer. In selected embodiments, the water-soluble polymer is cold soluble, meaning that the water-soluble polymer is soluble in cold water. The water-soluble polymer can be soluble in water at a maximum temperature of 40 °C, in particular the polymer can be soluble in water at a maximum temperature of 38°C, in particular the polymer can be soluble in water at a maximum temperature of 35°C, in particular the polymer can be soluble in water at a maximum temperature of 30°C Such a solubility in water enables an integration of the multilayer e. g. in a paper recycling cycle, in particular in paper recycling according to DIN EN 13430 (as of the end of 2021). The term "soluble" as used herein means that the substance has a solubility being more than 0.1 g per 100 mL of solvent.

The water-soluble polymer is at least one of:
- poly(vinyl alcohol) (PVOH),
- cellulose-ether polymer,
- Butenediol-Vinylalcohol-Copolymer (BVOH),
- Ethylene-Vinylalcohol-Copolymers (EVOH).

The water-soluble polymer can comprise at least one vinyl-alcohol copolymer and/or a mixture and/or blend of two or more vinyl-alcohol copolymers. The copolymers can differ in molar mass (for instance, to optimize product performance with respect to thermal and mechanical performance of the final products or with respect to manufacturing conditions) and molecular architecture, e. g. branching, comonomer type and amount, to name only a few variation parameters.

The water-soluble polymer can comprise further polar comonomers. Examples include maleic acid and maleic acid anhydride, fumaric acid and itaconic acid.

In embodiments, the first layer comprises at least one of a filler (inorganic such as salt or organic such as cellulose), a plasticizer, a processing aid and/or a stabilizer.

The first layer can comprise an inorganic filler. The inorganic filler can be:
- talcum
- a salt, in particular a salt of an alkaline metal, an earth alkaline metal, aluminum containing salt and/or a mixture thereof, in particular NaCl, Na-citrate, and the respective potassium analogues and/or a mixture thereof. The addition of salts can enhance the melt flow index (MFI), hence improving hot-melt processability of the formulations. It can also improve solubility, disintegration, and bio-degradation speed e. g. for composting.
- a clay mineral, in particular bentonite, montmorillonite, illite, chlorite to name only a few.
- a single metal
- a mixed metal carbonate, in particular calcium carbonate including precipitated calcium carbonate
- a silica, in particular fumed silica

The first layer can comprise 1-40 wt.% of salt, in particular 2-30 wt.% of the salt. The first layer can comprise at least 15 wt.% of salt.

The salt content can improve the processability of the first layer.

The first layer can comprise an organic filler. The organic filler can be
- cellulose and cellulose derivatives like cellulose esters, cellulose ethers etc., lignocellulose and/or a mixture thereof, in particular low molar mass oligomers of the same
- starch and starch derivatives, in particular low molar mass oligomers of the same. The organic filler can be Chitin, Chitosan and derivatives thereof. The organic filler can be coffee silverskin.

The plasticizer can be a liquid or a solid. The plasticizer can be partially or fully soluble in the base polymer. The plasticizer can be hygroscopic. The plasticizer may be selected from the group consisting of polyols (oligo- and polyhydroxy compounds), low molecular weight amides, in particular of triols, diols, polymeric-triols, polymeric-diols, for example glycerine, ethylene glycol, propylene glycol, triethylene glycol, lower molecular weight polyethylene glycols; and lower molecular weight amides. In certain embodiments, the plasticizer may be selected from the group consisting of dipropylene glycol, higher oligomers of ethylene glycol or propylene glycol, butylene glycol, glycerol, pentaerythritol, sorbitol, 1,4-Monoanhydrohexitols, 1,4-3,6-dianhydrohexitols as well as esters of the same. Preferred plasticizers are glycerine, and polypropylene glycol. Glycerine or other plasticizers may be present in an amount of between 2% and 25%, especially between 5% and 18%.

The filler can be provided in a higher percentage by weight than the plasticizer. The ratio of filler to plasticizer can be 1.25-12: 1, in particular 1.25-7:1, in particular 1.4-5-5:1, in particular 4-5:1.

The stabilizer can be a primary antioxidant, a secondary antioxidant, in particular a phosphite, thio-ester and/or C-radical scavenger. The stabilizer can be UV-stabilizer. It can be applied for stabilization during processing and/or storage and/or use.

The processing aid can be a long chain aliphatic acid, metal salt of the same and/or derivatives of the same, for instance esteramides or esters.

In an embodiment, the first layer may be made of a composition comprising 50 - 100 wt.% of at least one water-soluble polymer, in particular a vinyl-alcohol containing polymer as defined herein. The first layer can comprise a filler. Possible fillers are organic fillers such as cellulose or cellulose derivatives and/or an inorganic filler such as talcum and/or salt.

The filler may be added to the at least one water-soluble polymer of the fist layer in an amount of 2 to 35 wt.%.

The first layer has a maximum water content of 10 wt.%, for example a water content of not more than 5 wt.%, especially of not more than 1 wt.% or not more than 0.5 wt.%. the water may be added in form of an aqueous solvent with a pH value in the range of 6-8.

In a preferred embodiment, the first layer may be composed as follows:
- 50 - 100 wt.% of at least one water-soluble polymer, in particular a vinyl-alcohol copolymer and/or a mixture and/or blend of two or more vinyl-alcohol copolymers as defined herein,
- 0 - 50 wt.% or preferred 2 - 35 wt.% and even more preferred 5 - 23 wt.% of a filler, in particular talcum or a salt,
- 0 - 18 wt.% or preferred 2 - 15 wt.% and even more preferred 5 - 10 wt.% of at least one plasticizer,
- 0 - 10 wt.% or preferred 2 - 8 wt.% and even more preferred 3 - 5 wt.% of the aqueous solvent such as water.

The sum of all components of the composition of the present invention is 100 % per weight. In other words, the composition according to the present invention are made up to 100 % per weight with the aqueous solvent, such as water

In embodiments, the second layer comprises a water-insoluble polyester.

The water-insoluble polyester is at least one of an aliphatic polyester, poly(hydroxy alkanoates) (PHAs), polylactic acid (PLA), polybutylene succinate (PBS), poly-3-hydroxyvalerate (PHV), poly-4-hydroxybutyrate (PHBV), poly(hydroxy butyrates) (PHB), in particular Poly(3-hydroxy butyrate) as well as copolymers containing 3-hydroxybutyrate as comonomers, preferably, homo- and/or copolyester comprise at least to an extent of 80 wt.% of aliphatic units.

The polyester can be obtained by polycondensation of one or more diacids and one or more polyols, in particular resulting in poly(alkylene succinates), like Poly(ethylene succinate), Polypropylene succinate), Poly(butylene succinate), in Poly(alkylene adipates), Poly(ethylene furanoates), and co-condensates thereof. The resulting polyester can contain < 20% aromatic moieties. In particular the polyester does not contain aromatic moieties.

The polyester can be obtained by polycondensation of one or more hydroxy-carboxylic acids.

The polyester can be obtained by ring opening homo- or copolymerization of one or more cyclic lactones, in particular Polyglycolide (K. Yamane et. al. "Development of an industrial production technology for high-molecular-weight polyglycolic acid", Polymer Journal (29014) 46, 769-775), Poly(lactic acid), Polycaprolactone, to name only a few. The polyester can as well be a copolymers thereof.

The polyester can be based on one or more poly(hydroxy alkanoates) (PHAs) obtained from bio-source by fermentation and optionally subsequent modification. See for instance: Biotech. Progr. 2018, Vol. 34, No. 1 "Polyhydroxyalkanoates: Properties and Chemical Modification Approaches for Their Functionalization".

The polyester can comprise short chain (sc) PHAs (typically comprising up to 5 carbon atoms within the monomer units), in particular Poly(hydroxy propionate), poly(hydroxy butyrates) (PHBs) and poly(hydroxy valeriates). Poly(hydroxy alkylates) can occur in form of one or more chemically different isomers. In particular Poly(hydroxy butyrate) can be used in form of Poly(3-hydroxy butyrate) and/or Poly(4-hydroxy butyrate).

The polyester can comprise medium chain (mc) PHAs (comprising 6 to 14 carbon atoms per monomer unit), in particular Poly(3-Hydroxy hexanoate), and can also be applied in form of their homopolymers or copolymers. Short chain alkanoates and medium chain alkanoates can be present in respective copolymers.

To adjust physical parameters, like glass transition temperature (Tg), melting temperature (Tm), etc. of the polyester, these may contain specific amounts of comonomers or may be blended with each other. Examples include 3-hydroxy butyrate rich copolymers, which may incorporate 4-hydroxy butyrate or 3-hydroxy valerate or 3-hydroxy hexanoate as comonomer, to name only a few options. Also, terpolymers and higher copolymers and blends of more than two polyester can be used. Typically, the melting point of suitable polyester will be sufficiently above the maximal application temperature. It also needs to withstand the application pressure under respective temperature. Typically, the melting temperature of the majority of the crystalline part of the polymer will be at least 5 K above such application temperature, more preferably more than 10 K above such application temperature.

The homo- and/or copolyester can comprise at least to an extent of 80 wt.% of aliphatic units.

The homo- and/or copolyester can be made from aliphatic building blocks by 90 wt.%. In particular the homo- and/or copolyester can be solely made from aliphatic building blocks.

In addition to ester moieties copolyester can comprise further polar moieties, in particular polycarbonate units, polyurethane units, polyamide units, to name only a few.

In embodiemnts, the second layer can comprise an additive. The additive can be at least one of a plasticizer and a stabilizer and a nucleating agent.

The plasticizer can similar to the plasticizer of the first layer be a liquid or a solid. The plasticizer can be partially or fully soluble in the base polymer. In particular the plasticizer can be trialkyl citrates, like triethyl citrate and epoxidized soybean oil, to name only a few. Selected further examples are e. g. given in V. Jost et. al.; European Polymer Journal 68 (2015) 302-312.

The stabilizer can be a primary antioxidant, secondary antioxidant, C-radical scavenger and/or UV-stabilizer. Stabilizers can be applied for stabilization during processing and/or storage and/or use.

Carbodiimides and Poly(carbodiimides) can be applied as water scavengers. They can be used in combination with phosphite based secondary antioxidants.

A nucleating agent can be applied. The nucleating agent can be selected from Handbook of Nucleating Agents, 2nd Ed. (ChemTec Publishing, Toronto 2021).

In a preferred embodiment, the second layer may be composed as follows:
- 60 - 100 wt.% of at least one water-insoluble polyester, in particular an aliphatic polyester as defined herein,
- 0 - 20 wt.% of a at least one plasticizer,
- 0 - 5 wt.% of at least one stabilizer,
- 0.1 - 2 wt.% of a nucleating agent,
- 0 - 30 wt.% of at least one solvent.

The sum of all components of the composition of the present invention is 100 % per weight. In other words, the composition according to the present invention are made up to 100 % per weight with the solvent such as dichloromethane, tetrahydrofuran, dimethylformamide or dimethylacetamide.

A further advantage of the multilayer system according to the present invention is, that the intermediate and the outer layer allow the formation of continuous first and second layers, without irreversibly binding the first and the second layer to each other. This can be advantageous at the end of the life-cycle of a multilayer packaging material, where it might be beneficial to separate individual layers of a multilayer for efficient and effective recycling.

In an embodiment, the layers of the multilayer can be at least partially separable from each other.

According to the state-of-the-art multiple layers of chemically similar material is irreversible bound to each other. The resulting material can also be called mono-material. Such a mono-material is difficult to impossible to recycle. In contrast to that the layer of the present multilayer can be separated from each other and can be recycled individually.

In embodiments, the layers of the multilayer can be separated from each other under the conditions of the recycling process. In particular, the layers are separable at a maximum temperature of 40 °C, in particular the layers are separable at a maximum temperature of 38°C to the most, in particular the layers are separable at a maximum temperature of 35°C to the most, in particular the layers are separable at a maximum temperature of 30°C to the most, in an aqueous environment.

In an embodiment, at least one of the first layer and the second layer can be bio-degradable, in particular the first layer is bio-degradable. In addition, the first layer can be separated from further layers of the multilayer. This can be done by simple shear stress or using only water to solve the first layer and reuse the solved polymers. While water-soluble polymers may be bio-degradable, this is not necessarily the case for all water-soluble polymers. The water-soluble polymer of the multi-layer may be bio-degradable in addition to being water-soluble.

In the present text, "bio-degradable" may mean biologically degradable according to the European standard EN 13432 (as of the end of 2021). In addition, or as an alternative, it may mean biologically degradable according to the European standard EN 14995 (as of the end of 2021). Thus "bio-degradable" especially refers to "biologically degradable according to EN 13432 and/or according to EN 14995.

In an embodiment, the first layer and/or the second layer can be bio-degradable in at least one of soil, water, waste water.

As far as in the present text water-soluble polymers are mentioned, such water-soluble polymer may optionally be (bio-)degradable in sewage treatment plants (aerobic biodegradability) in accordance with EN ISO 9888 (as of the end of 2021); determined in accordance with the so-called Zahn-Wellens test, in particular at 20°C.

Due to this the multilayer provides sufficient barrier properties for example for sensitive food products, and which simultaneously is compatible with existing recycling streams. In regions without such recycling streams or where landfill is common, the multilayer is neutral to the environment and decomposed in short time into carbon dioxide (CO2) and water (H2O) as well as biomass.

Multilayer made of bio-degradable plastics in addition often contain a significant share of fossil feedstocks (mostly they contain 50-60 %, in selected cases up to 80% biobased plastics).

Multilayer made of bio-degradable plastics according to the prior art sometimes show low barrier performance esp. against oxygen and water vapor as well as low head deforming stabilities.

The multilayer of the present invention can be compostable, in particular home compostable. At least one of the first layer and the second layer can be compostable, in particular home compostable.

Bio-degradation in the context of this text means the breakdown of the polymers of multilayer by microorganisms. Bio-degradability means that a material must have degraded to more than 90 percent to water, carbon dioxide (CO2) and biomass after a specified time under defined specific temperature, oxygen and humidity conditions in the presence of microorganisms or fungi.

The term compostable refers to a bio-degradation under specific conditions.

In order for the multilayer, in particular the first layer and/or the second layer, to be compostable, at least the following conditions can be fulfilled:
- at least 90% of the organic material must be verifiably bio-degraded in CO2 within 6 months;
- after 3 months of composting and subsequent screening through a 2 mm mesh sieve, no more than 10% residue of the original mass may remain;
- there must be no negative effects on the composting process in general;
- no negative effect of the resulting composts on plant growth (agronomic test) and/or ecotoxicity test;
- the maximum concentration of heavy metals (Cu, Zn, Ni, Cd, Pb, Hg, Cr, Mo, Se, As) and florins must not be exceeded.

During composting the multilayer, in particular at least one of the first layer and the second layer can be decomposed. The multilayer, in particular at least one of the first layer and the second layer can be composted and/or decomposed in a short time to carbon dioxide (CO2) and water (H2O) and biomass.

The multilayer, in particular at least one of the first layer and the second layer can be industrial and/or home compostable. The home compostability may not negatively influence the industrial composting process.

In the present text, "compostable" or "home compostable" means compostable or home compostable according to the European standard EN 13432 (as of the end of 2021) for packaging and/or according to the European standard EN 14995 (as of the end of 2021) for plastics/synthetic materials.

In order for the multilayer, in particular the first layer and/or the second layer, to be home compostable, at least the following conditions must be fulfilled:
- at least 90% of the material must have decomposed into water, carbon dioxide and biomass in a compost heap (at approx. 30°C) within 6 months;
- neither organic pollutants nor heavy metals may enter the soil;
- the substances must not have any negative impact on the compost quality;
- the products can be disposed of in the garden compost and in the organic waste bin.

The multilayer can have a thickness of 30 to 3000 micrometer, in particular at least 30 micrometre or at least 50 or at least 100 micrometre or at least 150 micrometre or even at least 300 micrometer. The maximum thickness of the multilayer can be 100 micrometer or 120 micrometer or 150 micrometer or 200 micrometer or 300 micrometer or 1000 micrometer or 1500 micrometer or 3000 micrometers to the most. The first layer can have a thickness of 2 micrometer to 1500 micrometer. The first layer can have a thickness of at least 2 micrometer or at least 3 micrometer or at least 5 micrometer or at least 10 micrometer or at least 20 micrometer or at least 500 micrometer or at least 700 micrometer or at least 1000 micrometer. The maximum thickness of the first layer can be 20 micrometer or 40 micrometer or 50 micrometer or 70 micrometer or 100 micrometer or 200 micrometer or 500 micrometer or 1000 micrometer or 1500 micrometer to the most.

The second layer can have a thickness of 2 micrometer to 1500 micrometer. The second layer can have a thickness of at least 2 micrometer or at least 3 micrometer or at least 5 micrometer or at least 10 micrometer or at least 20 micrometer or at least 500 micrometer or at least 700 micrometer or at least 1000 micrometer. The maximum thickness of the first layer can be 20 micrometer or 40 micrometer or 50 micrometer or 70 micrometer or 100 micrometer or 200 micrometer or 500 micrometer or 1000 micrometer or 1500 micrometer to the most.

In an embodiment, the first layer can have a thickness of 12 to 15 micrometer and the second layer can have a thickness of 25 micrometer.

The thickness of the first layer can be to the most 40-50 % of the overall thickness of the multilayer.

The multilayer can provide a seal strength. The seal strength allows for complex constructions and increased packing line speed, when used for packing. The seal strength is the tensile strength of the seal at ambient temperature. It is the maximum force required to separate the two layers of a seal under particular conditions. The seal strength may be measured according to the American Society for Testing and Materials method ASTM F88 in accordance with ISO 11607-1. In general, the seal strength of multilayer food packaging should be strong enough to ensure the integrity of the package during transportation, storage, and handling. It should prevent leaks, contamination, and premature opening. Seal strength values for food packaging are often determined through testing, considering factors like the seal width, packaging material properties, and anticipated stress during distribution. Seal strength values can range from a few newtons per 15 mm (N/15 mm) up to tens of newtons per 15 mm, or even higher for specialized applications.

In embodiments, the multilayer comprises a sealing layer. The sealing layer can be essentially identical or similar to the second layer and/or first layer. In particular, the the sealing layer comprises at least one of the following components: polyester, polyurethane(s), polycarbonate(s), aliphatic polyester, poly(hydroxy alkanoates) (PHAs), vinyl alcohol rich copolymer and/or homopolymer.

The method for producing the multilayer may comprise the steps of providing the intermediate layer, applying the first layer onto the intermediate layer by lamination or wet coating, applying the outer layer onto the first layer by lamination and applying the second layer onto the intermediate layer by lamination or by direct cast extrusion. In embodiments, at least two layers selected from the first layer, the second layer, the intermediate layer and the outer layer can be produced in one single process step of co-extrusion. Such a co-extrusion step may be referred to in literature as paper-plastic co-extrusion for manufacturing of paper plastic composites.

In selected embodiments, the multilayer is produced by at least one of:
- co-extrusion;
- thermoforming;
- co-injection moulding;
- compression moulding.

In the co-extrusion mono- as well as multiple component layer structures can be produced.

In the co-inj ection moulding two or even three components can be utilized to produce the multilayer.

The multilayer as described above can be used for packing, in particular for food packing, in particular for packing coffee.

Especially, biobased plastics in addition principally offer advantages in terms of CO₂ emissions, i.e. the use of compostable food containers with food residues inside, all taken from natural source, can be recycled via composting, suiting a circular economy. Hence there is a need for food containers containing e. g. dry powder or granulate with a function such as brewing of coffee for example, single portion coffee capsules for example.

A packaging can comprise a multilayer as described above.

Further preferred embodiments are evident from the dependent patent claims. Features of the method claims may be combined with features of the device claims and vice versa.

The subject matter of the invention will be explained in more detail in the following text with reference to exemplary embodiments which are illustrated in the attached drawings, which schematically show:
- Figure 1: shows a multilayer with an outer layer on the outer surface of the first layer;
- Figure 2: shows a multilayer with an outer layer on the outer surface of the second layer.

In principle, identical or functionally identical parts are provided with the same reference symbols in the figures.

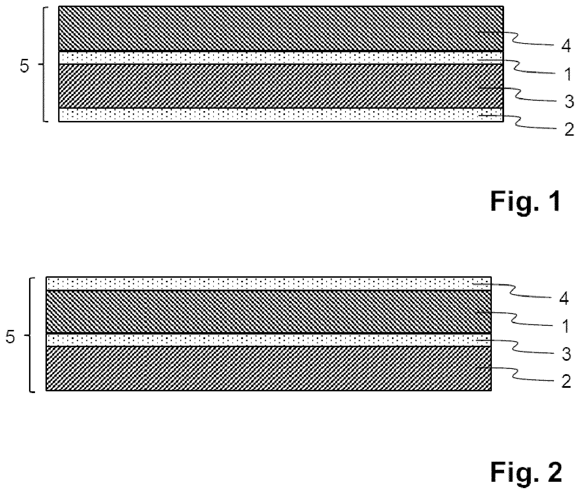

**Figure 1** shows a multilayer 5 comprising a first layer 1, a second layer 2, an intermediate layer 3 and an outer layer 4. The first layer 1 comprises a water-soluble polymer and can comprise an additive such as a salt or a filler such as talcum.

The first layer 1 has an oxygen transmission barrier.

The multilayer 5, in particular the first layer 1 has an oxygen transmission rate of a maximum of 3 cm³/m² per day at room temperature (RT, room temperature = 23°C) and a relative humidity of 50% (rel. H), in particular the oxygen transmission rate can be maximal 1 cm³/m² per day at room temperature and a relative humidity of 50%, in particular maximal 0.2 cm³/m² per day at room temperature (23°C) and a relative humidity of 50%.

The second layer 2 has a water vapor barrier and/or a humidity barrier.

The multilayer, in particular the second layer, has a water vapor and/or humidity barrier of a maximum of 15 g/m² per day at 23°C and a relative humidity of 85%, in particular a maximum of 10 g/m² per day at 23°C and a relative humidity of 85%, in particular 3 /m² per day at 23°C and a relative humidity of 85%.

The intermediate layer 3 is located between the first 1 and the second layer 2 and substantially consists of paper. The intermediate layer 3 makes it possible to form a multilayer consisting of the first layer 1 and the second layer 2.

The outer layer 4 is located on the outer surface of the first layer 1.

**Figure 2** shows a multilayer 5 comprising a first layer 1, a second layer 2, an intermediate layer 3 and an outer layer 4. The first layer 1 comprises a water-soluble polymer and a salt or alternatively another filler such as talcum.

The first layer 1 has an oxygen transmission barrier.

The multilayer 5, in particular the first layer 1 has an oxygen transmission rate of a maximum of 3 cm³/m² per day at room temperature (RT, room temperature = 23°C) and a relative humidity of 50% (rel. H), in particular the oxygen transmission rate can be maximal 1 cm³/m² per day at room temperature and a relative humidity of 50%, in particular maximal 0.2 cm³/m² per day at room temperature (23°C) and a relative humidity of 50%.

The second layer 2 has a water vapor barrier and/or a humidity barrier.

The multilayer, in particular the second layer, has a water vapor and/or humidity barrier of a maximum of 15 g/m² per day at 23°C and a relative humidity of 85%, in particular a maximum of 10 g/m² per day at 23°C and a relative humidity of 85%, in particular 3 /m² per day at 23°C and a relative humidity of 85%.

The intermediate layer 3 is located between the first 1 and the second layer 2 and substantially consists of paper. The intermediate layer 3 makes it possible to form a multilayer consisting of the first layer 1 and the second layer 2.

The outer layer 4 is located on the outer surface of the second layer 2.

While the invention has been described in present embodiments, it is distinctly understood that the invention is not limited thereto, but may be otherwise variously embodied and practised within the scope of the claims.

## Claims

1. Multilayer (5) comprising:
- at least one first layer (1); wherein the at least one first layer (1) is polar and functions as an oxygen transmission barrier;
- at least one second layer (2), wherein the at least one second layer (2) is apolar and functions as a water vapor and/or humidity barrier;
- at least one intermediate layer (3) located between the at least one first layer (1) and the at least one second layer (2), the at least one intermediate layer substantially consisting of paper;
- at least one outer layer (4) on an outer surface of the at least one first layer (1) or on an outer surface of the at least one second layer (2), the outer layer substantially consisting of paper.

2. Multilayer (5) according to claim 1, wherein the multilayer comprises an oxygen transmission rate of a maximum of 3 cm³/m² per day at 23°C and a relative humidity of 50%.

3. Multilayer (5) according to any of the previous claims, having a water vapor and/or humidity barrier of a maximum of 15 g/m² per day at 23°C and a relative humidity of 85%.

4. Multilayer (5) according to any of the previous claims, wherein the at least one first layer (1) comprises a water-soluble polymer.

5. Multilayer (5) according to claim 4, wherein the water-soluble polymer is at least one of poly(vinyl alcohol) (PVOH), cellulose-ether polymer, Butenediol-Vinylalcohol-Copolymer (BVOH), and Ethylene-Vinylalcohol-Copolymers (EVOH).

6. Multilayer (5) according to any of the previous claims, wherein the at least one first layer (1) comprises at least one additive, in particular the additive is selected from the group consisting of a salt, an inorganic filler, an organic filler, a plasticizer, and/or a stabilizer.

7. Multilayer (5) according to any of the previous claims, wherein the at least one second layer (2) comprises a water-insoluble polyester.

8. Multilayer (5) according to any of the previous claims, wherein the water-insoluble polyester is at least one of an aliphatic polyester, poly(hydroxy alkanoates) (PHAs), polylactic acid (PLA), polybutylene succinate (PBS), poly-3-hydroxyvalerate (PHV), poly-4-hydroxybutyrate (PHBV), poly(hydroxy butyrates) (PHB), in particular Poly(3-hydroxy butyrate) as well as copolymers containing 3-hydroxybutyrate as comonomers;
preferably, homo- and/or copolyester comprise at least to an extent of 80 wt.% of aliphatic units.

9. Multilayer (5) according to any of the previous claims, wherein the at least one second layer (2) comprises an additive;
in particular, the additive is selected from at least one of a plasticizer, a stabilizer and a nucleating agent.

10. Multilayer (5) according to any of the previous claims, wherein the layers of the multilayer can at least be partially separable from each other.

11. Multilayer (5) according to any of the previous claims, wherein at least one of the at least one first layer, the at least one second layer, the at least one intermediate layer or the at least one outer layer is bio degradable.

12. Method for producing a multilayer (5) according to any one of the previous claims, comprising the steps of:
- providing the intermediate layer,
- application of the first layer onto the intermediate layer by lamination or wet coating,
- application of the outer layer onto the first layer by lamination,
- application of the second layer onto the intermediate layer by lamination or by direct cast extrusion.

13. Use of a multilayer (5) according to claims 1-11 for packing, in particular for food packing, in particular for packing coffee.

14. Packaging (7) comprising a multilayer (5) according to claims 1-11.
